# EUROPÄISCHE PATENTANMELDUNG

(11) **EP 2 068 057 A2**
(43) Veröffentlichungstag der Anmeldung: **10.06.2009**
(21) Anmeldenummer: 08016405.6
(22) Anmeldetag: 17.09.2008
(51) Int. Cl.: F16K 31/06

(54) **Kolbenschieberventil**

(30) Priorität: 05.12.2007 DE 102007058620
(71) Anmelder: Rausch und Pausch GmbH, 95100 Selb (DE)
(72) Erfinder: Kießling, Bernd, Dipl.-Ing., 95030 Hof (DE); Döhla, Werner, 95482 Gefrees (DE)
(74) Vertreter: Klunker . Schmitt-Nilson . Hirsch

(57) **Zusammenfassung**

Ein elektromagnetisch betätigtes Kolbenschieberventil (1) mit Proportionalcharakteristik umfasst einen axial verschieblichen Kolben (5) zum Verschließen von radialen Durchtrittsöffnungen (7). Um bei einer mittels des Magnetantriebs vorgegebenen Querschnittsfläche der Fluiddurchtrittsöffnungen (7) einen parabelförmigen Verlauf des Druckverlusts bei steigendem Durchfluss in einen weitgehend linearen bis degressiven Verlauf zu verändern, ist eine Druckfühlbohrung (9) vorgesehen, welche die Fluideintrittsseite, an der der Druck P₁ herrscht, mit der Fluidaustrittsseite, an der der Druck P₂ herrscht, zu verbinden. In der Druckfühlbohrung (9) ist ein Druckfühlstift (10) axial verlagerbar angeordnet und drängt, wenn der Druck P₁ größer ist als der Druck P₂, den Schieberkolben (5) in seine Offenstellung. Dadurch erhöht sich die freie Querschnittsfläche der Fluiddurchtrittsöffnungen (7), und der Druckverlust ΔP = P₁ - P₂ sinkt entsprechend. Durch geeignete Auslegung des Verhältnisses der von dem Magnetantrieb aufgebrachten Magnetkraft und der von dem Druckfühlstift (10) aufgebrachten Druckkraft lässt sich die Hydraulikkennlinie (Druckverlust-über-Volumenstrom) abstimmen.

## Beschreibung

Die vorliegende Erfindung betrifft ein elektromagnetisch betätigtes Kolbenschieberventil, welches Anwendung in Regelventilen für Hydraulikmedien finden kann, insbesondere als Proportionaldrossel. Beispielsweise kann ein solches Drosselventil als Bypass zu einem hydraulischen Stoßdämpfer eingesetzt werden, um die Dämpfercharakteristik "hart" oder "weich" einzustellen.

Elektromagnetisch betätigte Proportionaldrosseln ermöglichen eine gezielte Veränderung des Durchflussquerschnitts unabhängig von Hilfsgrößen. Die Proportionalcharakteristik lässt sich durch geeignete Abstimmung und Dimensionierung der Bauteile des elektromagnetischen Antriebs erzielen. Dadurch wird erreicht, dass der Hub des Magnetankers zumindest über weite Strecken näherungsweise proportional zum Antriebsstrom ansteigt. Im Falle von Kolbenschieberventilen, bei denen ein oder mehrere radiale Fluiddurchtrittsöffnungen mittels eines axial verschieblichen Kolbens verschlossen und geöffnet werden, ermöglicht diese Proportionalcharakteristik eine gezielte Veränderung des freien Querschnitts der Fluiddurchtrittsöffnungen. Die Durchtrittsöffnungen können z.B. derart angeordnet und dimensioniert sein, dass bei einer linearen Erhöhung des Antriebsstroms eine dazu möglichst proportionale, also ebenfalls lineare Veränderung des freien Querschnitts der Fluiddurchtrittsöffnungen erzielt wird.

Nachteilhaft an derartigen Proportionaldrosseln ist der parabelförmige Verlauf des Druckverlustes bei steigendem Durchfluss. Bei Durchflussschwankungen kann dies zu einem starken Druckaufbau führen, der in vielen Anwendungen störend sein kann. Gewünscht wird stattdessen ein weitgehend linearer Anstieg des Druckverlusts mit zunehmendem Durchfluss oder sogar ein degressives Verhalten.

Es sind als Schieberventile ausgebildete Proportionaldrosselventile bekannt, bei denen versucht wird, einen Druckausgleich weitgehend strömungskraftkompensiert zu erreichen. Allerdings ist eine Kennlinienbeeinflussung über Strömungskräfte nur in Teilbereichen realisierbar. Auch sind derartige Lösungen bezüglich Stabilität anfällig und stark viskositäts- und temperaturabhängig.

Aufgabe der vorliegenden Erfindung ist es daher, ein elektromagnetisch betätigtes Kolbenschieberventil, insbesondere ein als Schieberventil ausgebildetes Proportionaldrosselventil, zu schaffen, mittels dessen in einfacher Weise über weite Strecken ein weitgehend linearer Anstieg des Druckverlusts mit zunehmendem Durchfluss oder auch ein degressives Verhalten erzielt wird.

Diese Aufgabe wird durch ein elektromagnetisch betätigtes Kolbenschieberventil mit den Merkmalen des Anspruchs 1 gelöst. In davon abhängigen Ansprüchen sind vorteilhafter Ausgestaltungen und Weiterbildungen der Erfindung angegeben.

Bei dem erfindungsgemäßen Ventil ist der axial verschiebliche Kolben zum Öffnen und Schließen der radialen Fluiddurchtrittsöffnung oder -öffnungen derart federvorgespannt, dass die Fluiddurchtrittsöffnung im nicht betätigten Zustand des Ventils, also bei nicht bestromter Erregerspule des Magnetantriebs, entweder geöffnet oder verschlossen ist. Wesentlich für die Erfindung ist (mindestens) eine Druckfühlbohrung, welche ähnlich wie die radiale Fluiddurchtrittsöffnung die Fluideintrittsseite mit der Fluidaustrittsseite verbindet. Anders als die Fluiddurchtrittsöffnung ist die Druckfühlbohrung vorzugsweise axial angeordnet, nämlich insbesondere koaxial zu dem axial verschieblichen Kolben. In der Druckfühlbohrung ist ein Druckfühlstift verlagerbar angeordnet. Zur Minimierung der Leckage ist der Druckfühlstift in der Druckfühlbohrung vorzugsweise mit einem engen Spalt gelagert. Gegebenenfalls können auch eine oder mehrere Ringdichtungen vorgesehen sein. Der derart in der Druckfühlbohrung gelagerte Druckfühlstift wird im Betrieb des Ventils auf einer Seite mit dem auf der Fluideintrittsseite herrschenden Druck und auf der entsprechend gegenüberliegenden Seite mit dem auf der Fluidaustrittsseite herrschenden Druck beaufschlagt. Wenn nun auf der Fluideintrittsseite ein höherer Druck anliegt als auf der Fluidaustrittsseite, so wird der Druckfühlstift aufgrund dieses erhöhten Drucks derart verlagert, dass er auf den Kolben, welcher fluidaustrittsseitig angeordnet ist, eine der Federkraft entgegengesetzte Kraft ausübt, die den Kolben in Richtung seiner Offenstellung drängt, in welcher er den Öffnungsquerschnitt der radialen Fluiddurchtrittsöffnung freigibt.

Diese Kraft des Druckfühlstifts ist proportional zu dem an der Fluiddurchtrittsöffnung auftretenden Druckverlust. Mit steigendem Durchfluss und dem damit einhergehenden erhöhten Druckverlust bewirkt der Druckfühlstift somit eine Verlagerung des Kolbens entgegen der Vorspannfeder und somit eine Vergrößerung des freien Querschnitts der Fluiddurchtrittsöffnung. Durch geeignete Auslegung des Verhältnisses der vom Magnetantrieb auf den Kolben ausgeübten Magnetkraft (durch Überwinden der Federvorspannkraft) und der vom Druckfühlstift auf den Kolben ausgeübten druckabhängigen Kraft, kann der üblicherweise parabelförmige Verlauf des Druckverlustes bei steigendem Durchfluss in einen über weite Teile linearen und sogar degressiven Verlauf verändert werden.

Der Begriff "Druckfühlbohrung" ist allgemein zu verstehen im Sinne eines wie auch immer gearteten Durchgangs zwischen der Fluideintrittsseite und der Fluidaustrittsseite. Dementsprechend kann auch der "Druckfühlstift" unterschiedlichste Gestalt annehmen. So können ein oder mehrere Druckfühlbohrungen vorgesehen sein, in der jeweils ein oder mehrere Druckfühlstifte angeordnet sind, beispielsweise auch ein ringförmiger Druckfühlstift.

Die Erfindung ist in gleicher Weise auf ein Ventil mit einem Kolbenschieber anwendbar, der radial außen liegende Fluiddurchtrittsöffnungen von innen verschließt, wie auch auf ein Ventil mit einem Kolbenschieber, der radial innen liegende Fluiddurchtrittsöffnungen von radial außen verschließt. Die zuletzt genannte Variante wird bevorzugt, da sie eine kompakte Ausbildung des Ventils ermöglicht. In diesem Falle ist das Ende des Kolbens, mittels welchem die radiale Fluiddurchtrittsöffnung verschlossen wird, vorzugsweise becherförmig ausgebildet, so dass es durch axiales Verschieben des Kolbens die radiale Fluiddurchtrittsöffnung von radial außen verschließt.

Gemäß einer bevorzugten Ausgestaltung der Erfindung ist der Kolben über eine Kolbenstange mit dem Magnetanker des Magnetantriebs verbunden, wobei die Kolbenstange mit ihrem von der Fluidöffnung entfernten Ende in einer zentralen Axialbohrung des Magnetankers an dem von der Fluidöffnung entfernten Ende des Magnetankers fixiert ist. Dadurch erhält man eine Kolbenstange mit beträchtlicher Länge, die nur an ihrem entfernten Ende mit dem Magnetanker verbunden ist, so dass sie durch Verschwenken und/oder Verbiegen geringfügige radiale Schwankungen und Toleranzen ausgleichen kann. Dies ist für den reibungslosen Betrieb des Ventils von Vorteil.

Gemäß einer weiteren bevorzugten Ausgestaltung stützt sich die Vorspannfeder, mit welcher der Kolben in die normale Schließstellung gedrängt wird, gegen einen Schraubeinsatz ab. Über die Einschraubtiefe des Schraubeinsatzes lässt sich dann die Federvorspannkraft in einfacher Weise justieren.

Nachfolgend wird die Erfindung beispielhaft anhand der begleitenden Zeichnungen erläutert. Darin zeigen:
- Fig. 1: schematisch das Prinzip des erfindungsgemäßen Kolbenschieberventils gemäß einem bevorzugten Ausführungsbeispiel der Erfindung,
- Fig. 2: das schematische Ventil aus Fig. 1 als detaillierteres Ausführungsbeispiel,
- Fig. 3: die Hydraulikkennlinie (Druckabfall über Durchfluss) des Ventils aus Fig. 1 für unterschiedliche Antriebsströme, jedoch ohne den erfindungsgemäßen Druckfühler, und
- Fig. 4: die Hydraulikkennlinien wie in Fig. 3, jedoch mit dem erfindungsgemäßen Druckfühler.

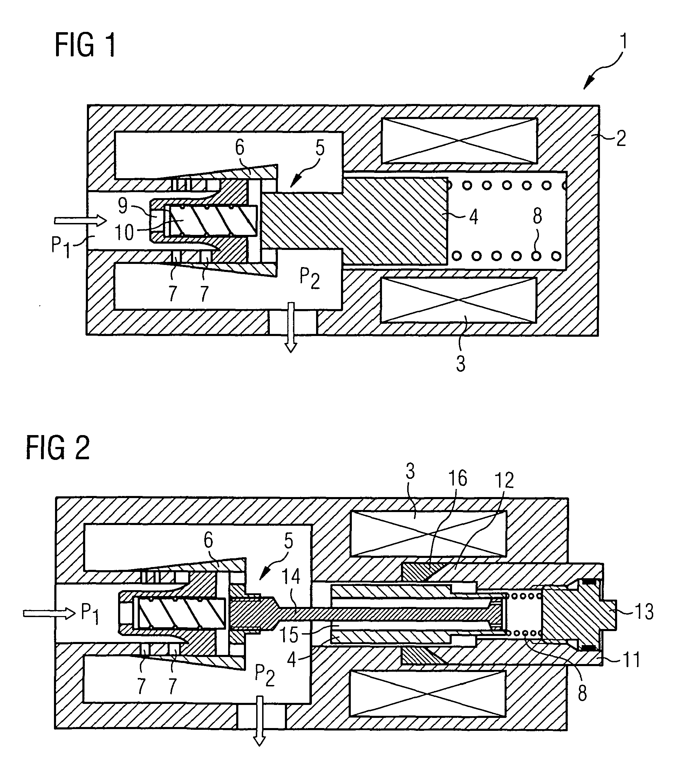

Fig. 1 zeigt schematisch ein bevorzugtes Ausführungsbeispiel eines elektromagnetisch betätigten Kolbenschieberventils mit integriertem Druckfühlstift 10. Das Ventil 1 umfasst ein Gehäuse 2, in dem eine Erregerspule 3 relativ zu einem axial verlagerbaren Magnetanker 4 aufgenommen ist. Der Magnetanker 4 ist fest mit einem Kolben 5 verbunden, dessen freies Ende 6 hier becherförmig ausgeführt ist. Eine Verlagerung des Magnetankers 4 in die eine oder andere axiale Richtung bewirkt somit gleichzeitig eine Verlagerung des Kolbens 5 mit seinem becherförmigen freien Ende 6. Mittels des becherförmigen Endes 6 des Kolbens 5 werden radiale Fluiddurchtrittsöffnungen 7 verschlossen. Eine Vorspannfeder 8, die über den Magnetanker 4 auf den Kolben 5 wirkt, drängt den Kolben 5 in eine Position, in der die radialen Fluiddurchtrittsöffnungen 7 vollständig verschlossen sind. Alternativ könnte die Vorspannfeder 8 auch so angeordnet sein, dass sie den Kolben 5 in seine Offenstellung drängt. Durch Bestromung der Erregerspule 3 lässt sich auf den Magnetanker 4 eine Magnetkraft aufbringen, mit der der Kolben 5 entgegen der Federvorspannkraft axial verlagert wird. Die Variierung der freien Querschnittsfläche der Fluiddurchtritts-öffnungen 7 ist dabei unabhängig von den auf der Fluideintrittsseite und der Fluidaustrittsseite herrschenden Drücken P1 bzw. P2.

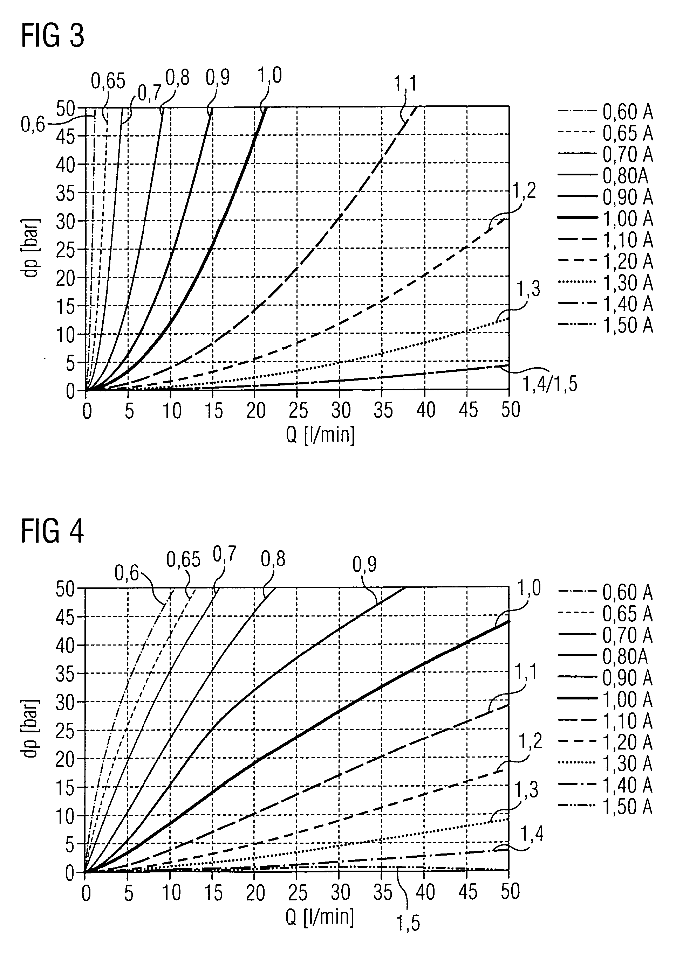

Wird nun der Kolben 5 mittels des Magnetantriebs 3, 4 entgegen der Federkraft 8 so verlagert, dass die Fluiddurchtrittsöffnung einen definierten Öffnungsquerschnitt besitzt, so hängt der Druckverlust ΔP = P1 - P2 normalerweise von dem die Fluiddurchtrittsöffnung durchströmenden Volumenstrom Q ab und nimmt einen entsprechend parabelförmigen Verlauf, wie er in Fig. 3 für unterschiedliche Stellungen des Kolbens 5, d.h. für unterschiedliche Erregerströme, dargestellt ist.

Indem nun zusätzlich eine Druckfühlbohrung 9 vorgesehen ist, welche die Fluideintrittsseite, an der der Druck P1 herrscht, mit der Fluidaustrittsseite, an der der Druck P2 herrscht, verbindet und in der der Druckfühlstift 10 axial verlagerbar angeordnet ist, lässt sich der parabelförmige Verlauf in einen weitgehend linearen bis degressiven Verlauf verändern, wie er in Fig. 4 dargestellt ist. Dies wird dadurch erreicht, dass der Druckfühlstift 10 aufgrund der Druckdifferenz ΔP gegen den Kolben 5 gedrängt wird und auf diese Weise eine Druckkraft auf den Kolben 5 ausübt, die in dem hier dargestellten Ausführungsbeispiel mit normal geschlossenen Fluiddurchtrittsöffnungen 7 genau wie die Magnetkraft der Federvorspannkraft entgegenwirkt. (Im Falle eines Ventils, welches im unbestromten Zustand offen ist, wirken die Druckkraft des Druckfühlstifts 10 und die Federvorspannkraft in entgegengesetzte Richtungen.) Die freie Querschnittsfläche der Fluiddurchtrittsöffnungen 7 wird in jedem Fall durch die Druckkraft des Druckfühlstifts 10 vergrößert, wodurch sich der Durchfluss Q erhöht und die Druckdifferenz ΔP wieder entsprechend abnimmt. Durch geeignete Auslegung des Verhältnisses der durch den Magnetantrieb erzeugten Magnetkraft und der durch den Druckfühlstift 10 erzeugten druckabhängigen Kraft lässt sich die Hydraulikkennlinie, wie sie in Fig 4 dargestellt ist, abstimmen.

Der Verlauf der Hydraulikkennlinie lässt sich durch Veränderung der Federvorspannkraft und über eine geeignete Wahl der wirksamen Querschnittsfläche des Druckfühlstifts 10 beeinflussen. Je größer die wirksame Querschnittsfläche, im Falle eines runden Druckfühlstifts 10 also der Druckfühlstiftdurchmesser ist, desto größer ist die Wirkung der vom Druckfühlstift auf den Kolben ausgeübten Druckkraft. Dementsprechend steiler verläuft die Hydraulikkennlinie, denn der Durchfluss Q erhöht sich aufgrund der mit der erhöhten Druckkraft einhergehenden vergrößerten freien Querschnittsfläche der Fluiddurchtrittsöffnungen 7 entsprechend. Sofern das Ventil ein normal geschlossenes Ventil ist, bei dem der Druckfühlstift 10 genau wie der Magnetantrieb gegen die Kraft der Vorspannfeder 8 arbeitet (Fig. 1), kann über die Einstellung der Federvorspannkraft ein Punkt definiert werden, an welchem sich das Ventil aufgrund der Druckdifferenz ΔP zu öffnen beginnt, selbst wenn kein Erregerstrom oder nur ein geringer Erregerstrom anliegt, welcher allein zur Überwindung der Federvorspannkraft nicht ausreichen würde.

Fig. 2 zeigt eine bevorzugte Möglichkeit, wie das in Fig. 1 schematisch dargestellte Ventil vorteilhaft ausgestaltet werden kann. Der Magnetantrieb umfasst hier ergänzend zur Erregerspule 3 und dem Magnetanker 4 einen Magnetkern 11, in welchem der Magnetanker 4 axial verlagerbar ist. Ein magnetisch nicht leitender Ring 16 stellt sicher, dass der Magnetkreis nicht über den Magnetanker 4 geschlossen wird, da sich der Magnetanker 4 dann bei Bestromung nicht bewegen würde. Der Magnetkern 11 weist an einem Ende einen Magnetkonus 12 auf, der mit den weiteren Bestandteilen des Ventils, insbesondere dem Magnetanker 4 und der Vorspannfeder 8 so abgestimmt ist, dass insgesamt ein elektromagnetischer Antrieb mit Proportionalcharakteristik gegeben ist.

In dem ortsfest fixierten Magnetkern 11 stützt sich die Vorspannfeder 8 axial ab. Mittels eines in den Magnetkern 11 axial eingeschraubten Schraubeinsatzes 13 lässt sich die Federvorspannkraft der Vorspannfeder 8 exakt einstellen.

Gemäß einer weiteren Ausgestaltung ist der Kolben 5 zweiteilig ausgebildet und umfasst zusätzlich zu dem becherförmigen freien Ende 6 eine vergleichsweise lange und schlanke Kolbenstange 14, die in das becherförmige Ende 6 eingeschraubt ist. Mit ihrem von den Fluiddurchtrittsöffnungen 7 entfernten Ende ist die Kolbenstange 14 in einer zentralen Axialbohrung 15 des Magnetankers 4 fixiert, und zwar wiederum an dem von den Fluiddurchtrittsöffnungen 7 entfernt gelegenen Ende des Magnetankers 4. Durch die Lagerung des Kolbens 5 an dieser Stelle, die weit von den Fluiddurchtrittsöffnungen 7 entfernt liegt, können radiale Toleranzen und Schwankungen im Betrieb durch Verschwenken und/oder Verbiegen der Kolbenstange 14 ausgeglichen werden.

Das zuvor beschriebene Ventil kann beispielsweise als Bypass zu einem Hydraulikdämpfer vorgesehen werden, um die Dämpfungscharakteristik des Hydraulikdämpfers einzustellen. Durch einen solchen Bypass mit darin eingesetztem elektrischmagnetisch einstellbaren Drosselventil lässt sich der Gesamtdurchflussquerschnitt des Hydraulikdämpfers variieren, so dass die Dämpfercharakteristik auf "hart" und "weich" sowie beliebige Zwischenstellungen einstellbar ist.

## Patentansprüche

1. Elektromagnetisch betätigtes Kolbenschieberventil (1), umfassend
- ein Ventilgehäuse (2) mit einer Fluideintrittsseite (P₁), einer Fluidaustrittsseite (P₂) und mindestens einer die Fluideintrittsseite mit der Fluidaustrittsseite verbindenden radialen Fluiddurchtrittsöffnung (7),
- eine Erregerspule (3) und einen mittels der Erregerspule (3) axial verschieblichen Kolben (5), der so angeordnet ist, dass durch axiales Verschieben des Kolbens (5) die mindestens eine radiale Fluiddurchtrittsöffnung (7) geöffnet und verschlossen werden kann, und
- eine Vorspannfeder (8), mittels der der Kolben (5) derart vorgespannt ist, dass die mindestens eine radiale Fluiddurchtrittsöffnung (7) im nicht bestromten Zustand der Erregerspule (3) entweder geöffnet oder verschlossen ist,
**gekennzeichnet durch** mindestens eine die Fluideintrittsseite (P₁) mit der Fluidaustrittsseite (P₂) verbindende Druckfühlbohrung (9), in der ein Druckfühlstift (10) verlagerbar angeordnet ist, wobei der Druckfühlstift (10) im Betrieb des Ventils (1) auf einer Seite mit dem auf der Fluideintrittsseite (P₁) herrschenden Druck und auf der entsprechend gegenüberliegenden Seite mit dem auf der Fluidaustrittsseite (P₂) herrschenden Druck beaufschlagt ist und aufgrund eines höheren Drucks auf der Fluideintrittsseite (P₁) derart in der Druckfühlbohrung (9) verlagert wird, dass er eine in Öffnungsrichtung wirkende Kraft auf den Kolben (5) ausübt.

2. Kolbenschieberventil nach Anspruch 1, **dadurch gekennzeichnet, dass** die Erregerspule (3), ein ortsfest im Gehäuse fixierter Magnetkern (11), ein mit dem Kolben (5) gekoppelter Magnetanker (4) und die Vorspannfeder (8) als elektromagnetischer Antrieb mit Proportionalcharakteristik ausgebildet sind.

3. Kolbenschieberventil nach Anspruch 2, **dadurch gekennzeichnet, dass** der Magnetkern (4) einen Magnetkonus (12) aufweist.

4. Kolbenschieberventil nach einem der Ansprüche 1 bis 3, **dadurch gekennzeichnet, dass** der Kolben (5) über eine Kolbenstange (14) mit dem Magnetanker (4) verbunden ist, wobei die Kolbenstange (14) mit ihrem von der mindestens einen Fluiddurchtrittsöffnung (7) entfernt gelegenen Ende in einer Axialbohrung (15) des Magnetankers (4) fixiert ist, und zwar an dem von der mindestens einen Fluiddurchtrittsöffnung (7) entfernt gelegenen Ende des Magnetankers (4).

5. Kolbenschieberventil nach einem der Ansprüche 1 bis 4, **dadurch gekennzeichnet, dass** sich die Vorspannfeder (8) gegen einen Schraubeinsatz (13) abstützt, über dessen Einschraubtiefe sich die Vorspannkraft der Vorspannfeder (8) justieren lässt.

6. Kolbenschieberventil nach einem der Ansprüche 1 bis 5, **dadurch gekennzeichnet, dass** das Ende (6) des Kolbens (5), mittels welchem die mindestens eine radiale Fluiddurchtrittsöffnung (7) verschließbar ist, becherförmig ausgebildet ist und die mindestens eine radiale Fluiddurchtrittsöffnung (7) von radial außen verschließt.

7. Hydraulikdämpfer umfassend mindestens eine Bypass-Leitung, in der ein Kolbenschieberventil (1) nach einem der Ansprüche 1 bis 6 vorgesehen ist.
